# EUROPÄISCHE PATENTSCHRIFT

(11) **EP 2 417 848 B1**
(45) Veröffentlichungstag und Bekanntmachung des Hinweises auf die Patenterteilung: **14.02.2018**
(21) Anmeldenummer: 11006593.5
(22) Anmeldetag: 11.08.2011
(51) Int. Cl.: A01C 17/00, A01C 21/00

(54) **Verfahren zur Optimierung der Verteilung von Mineraldünger**
Method for optimising the distribution of mineral fertiliser
Procédé d'optimisation de la répartition d'engrais minéral

(30) Priorität: 13.08.2010 DE 102010034242; 28.01.2011 DE 102011009761
(43) Veröffentlichungstag der Anmeldung: 15.02.2012
(73) Patentinhaber: RAUCH Landmaschinenfabrik GmbH, 76547 Sinzheim (DE)
(72) Erfinder: Stöcklin, Volker, M. Sc., 77975 Ringsheim (DE); Dingeldey, Nico, 64397 Modautal (DE); Rauch, Norbert, Dr., 76547 Sinzheim (DE)
(74) Vertreter: Lichti - Patentanwälte Partnerschaft mbB

(56) Entgegenhaltungen:
- EP-A1- 0 578 988
- EP-A1- 0 726 024
- EP-A1- 1 692 929
- DE-A1- 19 723 359
- DE-A1- 19 938 849

## Beschreibung

Die Erfindung betrifft ein Verfahren zur Optimierung der Verteilung von Mineraldünger mittels eines Zweischeibenstreuers zwischen der beim Fahrgassenfahren durch Überlappung der Streufächer erzielten gleichmäßigen Düngerverteilung im Feldinneren und der Düngerverteilung im Vorgewende bzw. den Grenzfahrgassen.

Im Feldinneren wird eine gleichmäßige Düngerverteilung durch die bei einer festgelegten Arbeitsbreite definierte Überlappung beim Anschlussfahren in den Fahrgassen erreicht. Eine gleichmäßige Düngerverteilung z.B. im Vorgewende und an den Feldgrenzen auf einem rechteckförmigen Feld und umso mehr auf einer von der Rechteckform abweichenden Feldform - ein sehr häufig vorkommender Fall - ist mittels Scheibendüngerstreuern schwierig zu erreichen. Grund ist die halbkreisförmige Düngerablage, bei dem die Menge innerhalb des Halbkreises von der Mitte jeweils zu den Randzonen rechts und links abnimmt.

Der Traktorfahrer und Bediener eines Scheibenstreuers hat bis heute immer versucht, die Problemzonen - hierzu zählen auch Baum- oder Strauchgruppen in einem Feld - durch Erfahrung und Augenschein dennoch gleichmäßig zu düngen. Mit den derzeit existierenden Scheibenstreuern hat er folgende Möglichkeiten der Handhabung
- einfache mechanisch angetriebene Zweischeibenstreuer mit hydraulisch schaltbarer Dosierung rechts-links sowie mit Grenzstreueinrichtung: Damit kann der Landwirt die Feldgrenzen, die er in der Regel einmal mit der Grenzstreueinrichtung umfährt, relativ gut abstreuen. Beim Feldstreuen kann er im Vorgewende bedingt "rechtzeitig" aus- bzw. wieder einschalten und an schräg umlaufenden Feldstreifen die halbe Arbeitsbreite bedingt "rechtzeitig" ein- und wieder ausschalten.
- mechanisch angetriebene Zweischeibenstreuer mit elektronisch regelbarer Dosierung: Damit kann der Landwirt in Verbindung mit einer Grenzstreueinrichtung die Feldgrenzen, die er in der Regel einmal umfährt, relativ gut abstreuen. Beim Feldinneren kann er im Vorgewende rechtzeitig aus- bzw. wieder einschalten. An schräg laufenden Feldstreifen kann die Dosiermenge dem Augenschein nach bestimmt heruntergeregelt und die halbe Arbeitsbreite "rechtzeitig" aus- und wieder eingeschaltet werden.
- aufwendige, hydraulisch angetriebene Zweischeibenstreuer mit hydraulischem Antrieb der Verteilerscheiben und elektronisch regelbarer Dosierung rechts-links: Auch hier kann der Landwirt die Feldgrenzen, die er in der Regel einmal umfährt, relativ gut abstreuen. Beim Feldstreuen kann er im Vorgewende "rechtzeitig" aus bzw. wieder einschalten. An schräg auslaufenden Feldstreifen kann die Drehzahl der Verteilerscheiben mit der Dosiermenge dem Augenschein nach heruntergeregelt und die halbe Arbeitsbreite "rechtzeitig" aus- bzw. wieder eingeschaltet werden.
Bei der bekannten Verfahrensweise ist das Streuergebnis, nämlich die Düngerverteilung von der Erfahrung und dem guten Augenschein des Landwirts und damit maßgeblich von der individuellen Sorgfalt abhängig.

Aus der EP 1 692 929 A1 ist ein Verfahren nach dem Oberbegriff von Anspruch 1 bekannt.

Der Erfindung liegt die Aufgabe zugrunde, dem Landwirt ein automatisiertes Verfahren an die Hand zu geben, das ohne Abhängigkeit von Erfahrung und Augenschein eine gleichmäßige Düngerverteilung auf dem gesamten Feld gewährleistet, wobei von einer Standardeinstellung des Streuers für eine gewünschte Dosiermenge auf einer gewünschten Arbeitsbreite für die Streuarbeit inmitten des Feldes ausgegangen wird.
Diese Aufgabe wird bei einem Verfahren der eingangs genannten Art gelöst durch rechnerische Bestimmung von Übergangspunkten für den Übergang vom Feldinnern in die Übergangszone und für den Übergang von der Übergangszone in das Feldinnere, wobei an den Übergangspunkten Maßnahmen vorgenommen werden, die die Standardeinstellung des Streuers im Feldinneren hinsichtlich Dosiermenge der Verteilerscheiben jeweils für rechts und/oder links verändern und die Übergangspunkte in Abhängigkeit von der Arbeitsbreite im Feldinneren und einem versuchstechnisch ermittelten Kennwert für die Flugeigenschaft des zu streuenden Düngers bestimmt werden.

Die Erfindung geht von der Erkenntnis aus, dass neben der Arbeitsbreite, vor allem die Flugeigenschaft des zu streuenden Düngers einen maßgeblichen Einfluss bei der Düngerverteilung in den problematischen Übergangszonen hat. Die Arbeitsbreite und ein Kennwert für die Flugeigenschaft des Düngers lassen sich in eine rechnerische Abhängigkeit bringen, aufgrund der an den Übergangspunkten eine oder mehrere der Maßnahmen zur Änderung der Standardeinstellung des Zweischeibenstreuers ergriffen werden.

In vorteilhafter Ausführung ist vorgesehen, dass die Übergangspunkte als Abstandsmaße von einer Feldgrenze bestimmt werden.

In weiterhin vorteilhafter Ausführung ist vorgesehen, dass an den Übergangspunkten mittels GPS die vorgesehenen Maßnahmen automatisch geschaltet werden. Die Arbeitsbreite und der Kennwert für die Flugeigenschaft des Düngers werden vorzugsweise in einem elektronischen Bedienterminal eingegeben.

Zusätzlich zur Arbeitsbreite und dem Kennwert für die Flugeigenschaft des Düngers wird zweckmäßigerweise das Abstreuverhalten der Verteilerscheiben berücksichtigt.

Das Abstreuverhalten der Verteilerscheiben hängt von dem jeweiligen Typ der Verteilerscheibe oder von der Länge und/oder der Winkelanstellung der auf der Verteilerscheibe sitzenden Wurfflügel ab.

Auch der Kennwert für die Flugeigenschaft des Düngers hängt von der Abstreueigenschaft der Verteilerscheibe und deren Drehzahl ab.

In vorteilhafter Ausführung ist vorgesehen, dass die Arbeitsbreite im Vorgewende und die Arbeitsbreite in der Grenzfahrgasse bei der Bestimmung der Übergangspunkte berücksichtigt werden, soweit sie unterschiedlich von der Arbeitsbreite im Feldinneren sind.

Die Übergangspunkte werden als Abstandsmaße von der Achsmitte der Verteilerscheiben oder anderer Bezugspunkte der Steuer/Traktorkombination bestimmt.

Die an den Übergangspunkten vorgesehenen Maßnahmen zur Änderung der Standardeinstellung werden vorzugsweise mittels GPS automatisch geschaltet.

Die Arbeitsbreite und der Kennwert für die Flugeigenschaft des Düngers werden mit Vorteil in einem elektronischen Bedienterminal eingegeben.

Um eine gleichmäßige Düngerverteilung zu erreichen, müssen die Fahrgeschwindigkeit des Streuers bzw. des Traktors und/oder die Positioniergeschwindigkeit des Dosierorgans berücksichtigt werden. Mit Positioniergeschwindigkeit des Dosierorgans ist die Geschwindigkeit angesprochen, mit der das Dosierorgan aus der Dosierstellung in die Schließstellung bzw. umgekehrt bewegt wird.

In weiterer vorteilhafter Ausführung der Erfindung ist vorgesehen, dass das Abstreuverhalten der Verteilerscheiben in Abhängigkeit von dem Typ der Verteilerscheiben oder von der Länge und/oder der Winkelanstellung der auf der Verteilerscheibe sitzenden Wurfflügel berücksichtigt wird.

Ferner wird der Kennwert der Flugeigenschaft des gestreuten Düngers in Abhängigkeit von der Abstreueigenschaft der Verteilerscheibe und deren Drehzahl berücksichtigt.

Bei der Fahrt vom Feldinneren in das Vorgewende bzw. den Grenzfahrgassen ergibt sich bei gleicher Arbeitsbreite bei einem hohen Kennwert ein kleiner Abstand des Übergangspunkts zur Feldgrenze und bei einem niedrigen Kennwert ein größerer Abstand zur Feldgrenze.

Umgekehrt ergibt sich bei der Fahrt aus dem Vorgewende bzw. den Grenzfahrgassen in das Feldinnere bei gleicher Arbeitsbreite und einem hohen Kennwert ein größerer Abstand des Übergangspunktes zur Feldgrenze und bei einem niedrigeren Kennwert ein kleinerer Abstand zur Feldgrenze.

Schließlich ergibt sich bei gleicher Arbeitsbreite bei einem hohen Kennwert ein größerer Abstand zwischen dem Übergangspunkt vom Feldinneren in das Vorgewende bzw. den Grenzfahrgassen und dem Übergangspunkt vom Vorgewende bzw. den Grenzfahrgassen in das Feldinnere, während sich für einen kleineren Kennwert ein kleinerer Abstand ergibt.

Mit Vorteil ist vorgesehen, dass der Typ der Verteilerscheibe und/oder deren Würfflügellänge und/oder die Winkelanstellung der Wurfflügel an dem elektronischen Bedienterminal eingegeben werden. Dergleichen ist von Vorteil, wenn die Drehzahl der Verteilerscheiben gemessen und berücksichtigt wird.

Bei schräg verlaufenden Feldrändern ist vorgesehen, dass bei einem unter 85 Grad bis >0 Grad schräg zur Fahrgasse im Feldinneren verlaufenden Vorgewende bzw. Grenzfahrgasse die Übergangspunkte als Abstandsmaße zwischen dem Achsmittelpunkt der Verteilerscheiben und dem Schnittpunkt einer fahrgassenparallelen Linie durch die Zweischeibenstreuermitte mit der Feldgrenze definiert sind.
Für den gleichen Fall ist vorgesehen, dass die Übergangspunkte für das jeweilige Dosierorgan rechts/links getrennt berechnet werden.
Für den gleichen Fall ist vorgesehen, dass die Standardeinstellungen innerhalb der Übergangspunkte oder einer Teilstrecke rechts/links nacheinander verändert werden.
Vorteilhafterweise ist vorgesehen, dass der Winkel zwischen der Fahrgasse im Feldinnern und dem Vorgewende bzw. der Grenzfahrgasse in der Berechnung der Übergangspunkte für die jeweiligen Dosierorgane berücksichtigt wird. Die Erfindung zeichnet sich dadurch aus, dass bei einem unter 75 Grad bis >0 Grad schräg zur Fahrgasse im Feldinneren verlaufenden Vorgewende bzw. Grenzfahrgasse die Dosiermenge der dem Vorgewende bzw. der Grenzfahrgasse zugewandten Zweischeibenstreuerseite sowie die Drehzahl und/oder der Aufgabepunkt einseitig verändert werden.
Für den gleichen Fall kann vorgesehen sein, dass die Dosiermenge und/oder die Drehzahl und/oder der Aufgabepunkt beidseitig jedoch unterschiedlich verändert werden.

Grundsätzlich ist von Vorteil, wenn während des Schließens des Dosierorgans der Aufgabepunkt verlagert wird.

Schließlich ist von Vorteil, wenn die aktuelle Position des Streuers in Bezug zur Feldform und zu den Fahrgassen bei der Berechnung der Übergangspunkte und bei Einstellung des Streuers berücksichtigt wird.

Nachstehend ist die Erfindung anhand von zwei in der Zeichnung wiedergegebenen Ausführungsbeispielen beschrieben. In der Zeichnung zeigen:
- Fig. 1: eine schematische Draufsicht beim Streuen auf einem Feld mit einem rechtwinklig zu den Fahrgassen im Feldinnern angeordneten Vorgewende und
- Fig. 2: eine schematische Draufsicht auf ein Feld mit schräg zu den Fahrgassen im Feld verlaufenden Grenzfahrgassen.

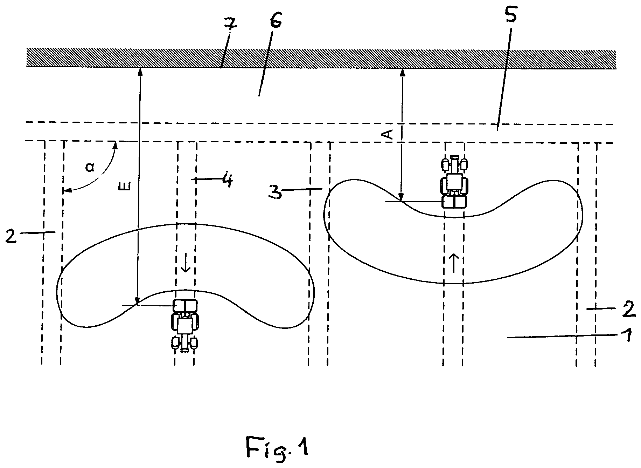

Bei beiden Ausführungsbeispielen laufen die Fahrgassen 2 im Feldinnern 1 parallel zueinander. Im Gegensatz zu der entzerrenden Darstellung in Fig. 1 fährt der Traktor mit dem Zweischeibenstreuer bei der Hin- und Rückfahrt in benachbarten Fahrgassen 3,4, so dass sich die Streufächer von Fahrgassen 3 zu Fahrgasse 4 überlappen. Die Fahrgasse 5 im Vorgewende 6 schließt einen Winkel α von 90° mit den Fahrgassen 3, 4 im Feldinnern ein. Bei der Fahrt des Traktors von der Fahrgasse 3 im Feldinnern 1 in das Vorgewende 6 werden die Dosierorgane im Abstand A von der Feldgrenze 7 abgeschaltet. Dies ist zugleich der Übergangspunkt. Bei der Rückfahrt aus dem Vorgewende 6 in das Feldinnere 1 werden die Dosierorgane im Abstand E von der Feldgrenze 7 eingeschaltet. Dies ist der Übergangspunkt bei der Rückfahrt.

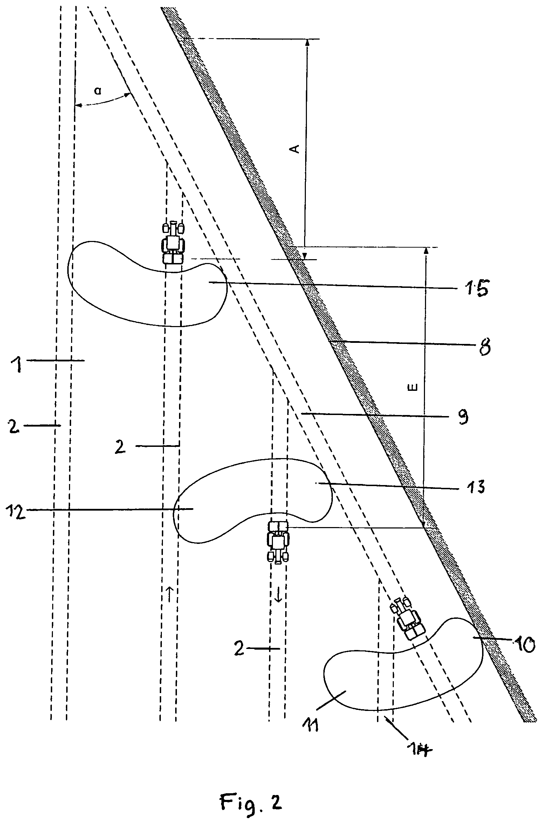

Bei den Ausführungsbeispiel nach Fig. 2 mit einer schräg zu den Fahrgassen 2 im Feldinnern verlaufenden Feldgrenze 8 mit entsprechend schräg verlaufender Grenzfahrgasse 9 bzw. einem schiefen Vorgewende wird dieser Bereich zunächst mit einer Grenzstreueinrichtung mit einem zur Feldgrenze 8 steil abfallenden Streubild 10 abgestreut, während auf der dem Feldinnern 1 zugekehrten Seite ein normaler halbseitiger Streufächer 11 ausgebildet ist. Um eine gleichmäßige Düngerverteilung bei der Anfahrt des Traktors in der Fahrgasse 2 im Feldinnern auf die schräg verlaufende Grenzfahrgasse 9 zu erreichen, wird der halbseitige Streufächer 15 auf der der Grenzfahrgasse 9 zugekehrten Seite mit den im einleitenden Teil der Beschreibung genannten Maßnahmen eingeengt, bis der in Fig. 2 oben gezeigte Traktor schließlich den Abstand A von der Feldgrenze erreicht und die Dosierorgane abgeschaltet werden. Auf der Rückfahrt (mittlerer Traktor) werden die Dosierorgane im Abstand E (Übergangspunkt) von der Feldgrenze eingeschaltet. Mit den im einleitenden Teil der Beschreibung genannten Maßnahmen wird bei einem dem Feldinneren zugekehrten normalen halbseitigen Streufächer 12 auf der der Grenzfahrgasse zugekehrten Seite ein eingeengter Streufächer erzeugt, der sich dann allmählich aufweitet, bis er die normale Form bei Erreichen der nächstäußeren parallelen Fahrgasse 14 erreicht.

## Patentansprüche

1. Verfahren zur Optimierung der Verteilung von Mineraldünger mittels eines Zweischeibenstreuers zwischen der beim Fahrgassenfahren durch Überlappung der Streufächer erzielten gleichmäßigen Düngerverteilung im Feldinneren (1) und der Düngerverteilung im Vorgewende (6) bzw. den Grenzfahrgassen (9) durch rechnerische Bestimmung von Übergangspunkten für den Übergang vom Feldinnern (1) in das Vorgewende (6) bzw. den Grenzfahrgassen (9) und für den Übergang vom Vorgewende bzw. den Grenzfahrgassen in das Feldinnere, wobei an den Übergangspunkten Maßnahmen vorgenommen werden, die die Standardeinstellung des Streuers im Feldinneren hinsichtlich der Dosiermenge der Verteilerscheiben jeweils für rechts und/oder links verändern, wobei die Übergangspunkte in Abhängigkeit von der Arbeitsbreite im Feldinneren bestimmt werden, **dadurch gekennzeichnet, dass** die Übergangspunkte ferner in Abhängigkeit von einem versuchstechnisch ermittelten Kennwert für die Flugeigenschaft des zu streuenden Düngers bestimmt werden, wobei bei einem unter 75 Grad bis > 0 Grad schräg zur Fahrgasse (2) im Feldinneren (1) verlaufenden Vorgewende (6) bzw. Grenzfahrgasse (9) sowohl die Dosiermenge der dem Vorgewende (6) bzw. der Grenzfahrgasse (9) zugewandten Zweischeibenstreuerseite als auch die Drehzahl der Verteilerscheiben und/oder der Aufgabepunkt einseitig verändert werden.

2. Verfahren nach Anspruch 1, **dadurch gekennzeichnet, dass** die Arbeitsbreite im Vorgewende (6) und die Arbeitsbreite in der Grenzfahrgasse (9) bei der Bestimmung der Übergangspunkte berücksichtigt werden, soweit sie unterschiedlich von der Arbeitsbreite im Feldinneren (1) sind.

3. Verfahren nach Anspruch 1 oder 2, **dadurch gekennzeichnet, dass** die Übergangspunkte als Abstandsmaße (E, A) von der Achsmitte der Verteilerscheiben oder andern Bezugspunkten der Steuer/Traktorkombination bis zu einer Feldgrenze (7, 8) bestimmt werden.

4. Verfahren nach Anspruch 1 bis 3, **dadurch gekennzeichnet, dass** an den Übergangspunkten mittels GPS die vorgesehenen Maßnahmen automatisch geschaltet werden.

5. Verfahren nach einem der Ansprüche 1 bis 4, **dadurch gekennzeichnet, dass** die Arbeitsbreite und der Kennwert für die Flugeigenschaft des Düngers in einem elektronischen Bedienterminal eingegeben werden.

6. Verfahren nach einem der Ansprüche 1 bis 5, **dadurch gekennzeichnet, dass** die Fahrgeschwindigkeit und/oder die Positioniergeschwindigkeit der Dosierorgane bei der Berechnung der Übergangspunkte berücksichtigt werden/wird.

7. Verfahren nach einem der Ansprüche 1 bis 6, **dadurch gekennzeichnet, dass** bei der rechnerischen Bestimmung der Übergangspunkte das Abstreuverhalten der Verteilerscheiben berücksichtigt wird.

8. Verfahren nach Anspruch 7, **dadurch gekennzeichnet, dass** das Abstreuverhalten der Verteilerscheiben in Abhängigkeit von dem Typ der Verteilerscheiben oder von der Länge und/oder der Winkelanstellung der auf der Verteilerscheibe sitzenden Wurfflügel berücksichtigt wird.

9. Verfahren nach einem der Ansprüche 1 bis 8, **dadurch gekennzeichnet, dass** der Kennwert der Flugeigenschaft des eingesetzten Düngers auch in Abhängigkeit von der Abstreueigenschaft der Verteilerscheibe und deren Drehzahl berücksichtigt wird.

10. Verfahren nach einem der Ansprüche 1 bis 9, **dadurch gekennzeichnet, dass** bei der Fahrt vom Feldinneren (1) in das Vorgewende (6) bzw. den Grenzfahrgassen (9) sich bei gleicher Arbeitsbreite bei einem hohen Kennwert der Flugeigenschaften ein kleinerer Abstand des Übergangspunktes zur Feldgrenze und bei einem niedrigeren Kennwert ein größerer Abstand zur Feldgrenze ergibt.

11. Verfahren nach einem der Ansprüche 1 bis 10, **dadurch gekennzeichnet, dass** bei der Fahrt aus dem Vorgewende (6) bzw. den Grenzfahrgassen (9) in das Feldinnere (1) sich bei gleicher Arbeitsbreite bei einem hohen Kennwert der Flugeigenschaften ein größerer Abstand des Übergangspunktes zur Feldgrenze und bei einem niedrigeren Kennwert ein kleiner Abstand zur Feldgrenze ergibt.

12. Verfahren nach einem der Ansprüche 1 bis 11, **dadurch gekennzeichnet, dass** sich bei gleicher Arbeitsbreite bei einem hohen Kennwert der Flugeigenschaften ein größerer Abstand zwischen dem Übergangspunkt vom Feldinnern (1) in das Vorgewende (6) bzw. den Grenzfahrgassen (9) und dem Übergangspunkt vom Vorgewende (6) bzw. den Grenzfahrgassen (9) in das Feldinnere (1) ergibt und sich entsprechend für einen kleineren Kennwert ein kleinerer Abstand ergibt.

13. Verfahren nach einem der Ansprüche 1 bis 12, **dadurch gekennzeichnet, dass** der Typ der Verteilerscheibe und/oder deren Würfflügellänge und/oder die Winkelanstellung der Wurfflügel an dem elektronischen Bedienterminal eingegeben werden.

14. Verfahren nach einem der Ansprüche 1 bis 13, **dadurch gekennzeichnet, dass** die Drehzahl der Verteilerscheiben gemessen und berücksichtigt wird.

15. Verfahren nach einem der Ansprüche 1 bis 14, **dadurch gekennzeichnet, dass** bei einem unter 85 Grad bis > 0 Grad schräg zur Fahrgasse im Feldinneren verlaufenden Vorgewende bzw. Grenzfahrgasse (9) die Übergangspunkte als Abstandsmaße (E, A) zwischen dem Achsmittelpunkt der Verteilerscheiben und dem Schnittpunkt einer fahrgassenparallelen Linie durch die Zweischeibenstreuermitte mit der Feldgrenze (8) definiert sind.

16. Verfahren nach einem der Ansprüche 1 bis 15, **dadurch gekennzeichnet, dass** bei einem unter 85 Grad bis > 0 Grad schräg zur Fahrgasse (2) im Feldinneren (1) verlaufenden Vorgewende bzw. Grenzfahrgasse (9) die Übergangspunkte für das jeweilige Dosierorgan rechts/links getrennt berechnet werden.

17. Verfahren nach einem der Ansprüche 1 bis 16, **dadurch gekennzeichnet, dass** bei einem unter 85 Grad bis > 0 Grad schräg zur Fahrgasse (2) im Feldinneren (1) verlaufenden Vorgewende bzw. Grenzfahrgasse (9) die Standardeinstellungen innerhalb der Übergangspunkte oder einer Teilstrecke rechts/links nacheinander verändert werden.

18. Verfahren nach einem der Ansprüche 1 bis 17, **dadurch gekennzeichnet, dass** der Winkel (α) zwischen der Fahrgasse (2) im Feldinnern (1) und dem Vorgewende (6) bzw. der Grenzfahrgasse (9) in der Berechnung der Übergangspunkte für die jeweiligen Dosierorgane berücksichtigt wird.

19. Verfahren nach einem der Ansprüche 1 bis 18, **dadurch gekennzeichnet, dass** während des Schließens der Dosierorgane der Aufgabepunkt verlagert wird.

20. Verfahren nach einem der Ansprüche 1 bis 19, **dadurch gekennzeichnet, dass** die aktuelle Position des Streuers in Bezug zur Feldform und zu den Fahrgassen (2, 9) bei der Berechnung der Übergangspunkte und bei Einstellung des Streuers berücksichtigt wird.

## Claims

1. Method for optimizing the distribution of mineral fertilizer by means of a two-disc spreader between the uniform distribution of fertilizer in the field interior (1), which is achieved by overlapping of the spreading fans during driving along tramlines, and the distribution of fertilizer in the headland (6) or the boundary tramlines (9), respectively, by calculative determination of transition points for the transition from the field interior (1) into the headland (6) or the boundary tramlines (9), respectively, and for the transition from the headland or the boundary tramlines, respectively, into the field interior, wherein measures which change the standard adjustment of the spreader in the field interior in respect of the metering quantity of the distributing discs for right and/or left in each case are undertaken at the transition points, wherein the transition points are determined depending on the working width in the field interior, **characterized in that** the transition points are furthermore determined depending on a test-identified characteristic value for the flying characteristic of the fertilizer to be spread, wherein, in the case of a headland (6) or boundary tramline (9), respectively, running obliquely with respect to the tramline (2) in the field interior (1) at less than 75 degrees to > 0 degrees, both the metering quantity of the two-disc-spreader side facing the headland (6) or the boundary tramline (9), respectively, and the rotational speed of the distributing discs and/or the point of application on one side are changed.

2. Method according to Claim 1, **characterized in that** the working width in the headland (6) and the working width in the boundary tramline (9) are taken into consideration in the determination of the transition points if said working widths are different from the working width in the field interior (1).

3. Method according to Claim 1 or 2, **characterized in that** the transition points are determined as distance dimensions (E, A) from the centre of the axis of the distributing discs or other reference points of the control/tractor combination as far as a field boundary (7, 8).

4. Method according to Claims 1 to 3, **characterized in that** the provided measures are automatically changed at the transition points by means of GPS.

5. Method according to one of Claims 1 to 4, **characterized in that** the working width and the characteristic value for the flying characteristic of the fertilizer are input in an electronic operator control terminal.

6. Method according to one of Claims 1 to 5, **characterized in that** the driving speed and/or the positioning speed of the metering members are/is taken into consideration in the calculation of the transition points.

7. Method according to one of Claims 1 to 6, **characterized in that** the spreading behaviour of the distributing discs is taken into consideration in the calculative determination of the transition points.

8. Method according to Claim 7, **characterized in that** the spreading behaviour of the distributing discs is taken into consideration depending on the type of distributing disc or on the length and/or the angling of the spreader blades sitting on the distributing disc.

9. Method according to one of Claims 1 to 8, **characterized in that** the characteristic value of the flying characteristic of the fertilizer used is also taken into consideration depending on the spreading characteristic of the distributing disc and the rotational speed thereof.

10. Method according to one of Claims 1 to 9, **characterized in that**, during the travel from the field interior (1) into the headland (6) or the boundary tramlines (9), respectively, a smaller distance of the transition point to the field boundary arises at a high characteristic value of the flying characteristics and a greater distance from the field boundary arises at a lower characteristic value, when the working width is identical.

11. Method according to one of Claims 1 to 10, **characterized in that**, during the travel from the headland (6) or the boundary tramlines (9), respectively, into the field interior (1), a greater distance of the transition point to the field boundary arises at a high characteristic value of the flying characteristics and a small distance from the field boundary arises at a lower characteristic value, when the working width is identical.

12. Method according to one of Claims 1 to 11, **characterized in that** a greater distance between the transition point from the field interior (1) into the headland (6) or the boundary tramlines (9), respectively, and the transition point from the headland (6) or the boundary tramlines (9), respectively, into the field interior (1) arises at a high characteristic value of the flying characteristics and, correspondingly, a smaller distance arises for a smaller characteristic value, when the working width is identical.

13. Method according to one of Claims 1 to 12, **characterized in that** the type of distributing disc and/or the spreader blade length thereof and/or the angling of the spreader blades are input to the electronic operator control terminal.

14. Method according to one of Claims 1 to 13, **characterized in that** the rotational speed of the distributing discs is measured and taken into consideration.

15. Method according to one of Claims 1 to 14, **characterized in that**, in the case of a headland or boundary tramline (9), respectively, running obliquely with respect to the tramline in the field interior at less than 85 degrees to > 0 degrees, the transition points are defined as distance dimensions (E, A) between the axis centre point of the distributing discs and the intercepting point of a tramline-parallel line through the two-disc-spreader centre with the field boundary (8).

16. Method according to one of Claims 1 to 15, **characterized in that**, in the case of a headland or boundary tramline (9), respectively, running obliquely with respect to the tramline (2) in the field interior (1) at less than 85 degrees to > 0 degrees, the transition points for the respective metering member on the right/left are calculated separately.

17. Method according to one of Claims 1 to 16, **characterized in that**, in the case of a headland or boundary tramline (9), respectively, running obliquely with respect to the tramline (2) in the field interior (1) at less than 85 degrees to > 0, the standard adjustments within the transition points or a subsection on the right/left are changed successively.

18. Method according to one of Claims 1 to 17, **characterized in that** the angle (α) between the tramline (2) in the field interior (1) and the headland (6) or the boundary tramline (9), respectively, is taken into consideration in the calculation of the transition points for the respective metering members.

19. Method according to one of Claims 1 to 18, **characterized in that** the point of application is shifted during the closing of the metering members.

20. Method according to one of Claims 1 to 19, **characterized in that** the current position of the spreader with respect to the shape of the field and with respect to the tramlines (2, 9) is taken into consideration in the calculation of the transition points and in the adjustment of the spreader.

## Revendications

1. Procédé d'optimisation de l'épandage d'engrais minéral à l'aide d'un épandeur à deux disques entre l'épandage régulier d'engrais en intérieur de champ (1) obtenu dans le cadre de la conduite en couloir par chevauchement des éventails d'épandage et l'épandage d'engrais en tournière (6) et/ou dans les couloirs de bordure (9) par détermination par calcul de points de transition pour la transition de l'intérieur de champ (1) à la tournière (6) et/ou aux couloirs de bordure (9) et pour la transition de la tournière et/ou des couloirs de bordure à l'intérieur de champ, des mesures étant réalisées au niveau des points de transition, ces mesures modifiant le réglage standard de l'épandeur en intérieur de champ en terme de quantité dosée des disques d'épandage respectivement à droite et/ou à gauche, les points de transition étant définis en fonction de la largeur de travail en intérieur de champ, **caractérisé en ce que** les points de transition sont en outre définis en fonction d'une valeur caractéristique calculée par technique expérimentale pour la propriété de dispersion de l'engrais à épandre, sachant qu'en cas de tournière (6) et/ou de couloir de bordure (9) s'étendant en intérieur de champ (1) suivant un angle de moins de 75 degrés à > 0 degré par rapport au couloir (2), tant la quantité dosée du côté de l'épandeur à deux disques orienté vers la tournière (6) et/ou le couloir de bordure (9) que la vitesse de rotation des disques d'épandage et/ou le point cible sont modifiés unilatéralement.

2. Procédé selon la revendication 1, **caractérisé en ce que** la largeur de travail dans la tournière (6) et la largeur de travail dans le couloir de bordure (9) sont prises en compte dans la détermination des points de transition dès lors qu'ils diffèrent de la largeur de travail en intérieur de champ (1).

3. Procédé selon la revendication 1 ou 2, **caractérisé en ce que** les points de transition sont définis comme une mesure d'écartement (E, A) du milieu de l'axe des disques d'épandage ou des autres points de référence de la combinaison commande/tracteur jusqu'à une bordure de champ (7, 8).

4. Procédé selon la revendication 1 à 3, **caractérisé en ce que** les mesures prévues au niveau des points de transition sont automatiquement commutées par GPS.

5. Procédé selon l'une quelconque des revendications 1 à 4, **caractérisé en ce que** la largeur de travail et la valeur caractéristique de la propriété de dispersion de l'engrais sont saisies dans un terminal de commande électronique.

6. Procédé selon l'une quelconque des revendications 1 à 5, **caractérisé en ce que** la vitesse de conduite et/ou la vitesse de positionnement des organes de dosage sont prises en compte dans le calcul des points de transition.

7. Procédé selon l'une quelconque des revendications 1 à 6, **caractérisé en ce qu'**en cas de détermination par calcul des points de transition, le comportement d'épandage des disques d'épandage est pris en compte.

8. Procédé selon la revendication 7, **caractérisé en ce que** le comportement d'épandage des disques d'épandage est pris en compte en fonction du type de disques d'épandage ou de la longueur et/ou de la position angulaire des ailes d'éjection reposant sur le disque d'épandage.

9. Procédé selon l'une quelconque des revendications 1 à 8, **caractérisé en ce que** la valeur caractéristique de la propriété de dispersion de l'engrais utilisé est également prise en compte en fonction de la propriété de dispersion du disque d'épandage et de sa vitesse de rotation.

10. Procédé selon l'une quelconque des revendications 1 à 9, **caractérisé en ce qu'**en cas de conduite de l'intérieur de champ (1) vers la tournière (6) et/ou vers les couloirs de bordure (9), on obtient à largeur de travail égale, en cas de valeur caractéristique élevée des propriétés de dispersion, une plus petite distance du point de transition à la bordure de champ et en cas de valeur caractéristique plus faible, une plus grande distance par rapport à la bordure de champ.

11. Procédé selon l'une quelconque des revendications 1 à 10, **caractérisé en ce qu'**en cas de conduite de la tournière (6) et/ou des couloirs de bordure (9) vers l'intérieur de champ (1), on obtient à largeur de travail égale, en cas de valeur caractéristique élevée des propriétés de dispersion, une plus grande distance du point de transition à la bordure de champ et en cas de valeur caractéristique plus faible, une plus petite distance par rapport à la bordure de champ.

12. Procédé selon l'une quelconque des revendications 1 à 11, **caractérisé en ce qu'**on obtient à largeur de travail égale, en cas de valeur caractéristique élevée des propriétés de dispersion, une plus grande distance entre le point de transition de l'intérieur de champ (1) à la tournière (6) et/ou aux couloirs de bordure (9) et le point de transition de la tournière (6) et/ou des couloirs de bordure (9) à l'intérieur de champ (1) et que de façon correspondante on obtient une plus petite distance pour une plus petite valeur caractéristique.

13. Procédé selon l'une quelconque des revendications 1 à 12, **caractérisé en ce que** le type de disque d'épandage et/ou sa longueur d'aile d'éjection et/ou la position angulaire des ailes d'éjection sont saisis au niveau du terminal de commande électronique.

14. Procédé selon l'une quelconque des revendications 1 à 13, **caractérisé en ce que** la vitesse de rotation des disques d'épandage est mesurée et prise en compte.

15. Procédé selon l'une quelconque des revendications 1 à 14, caractérisé en ce, les points de transition sont définis sous la forme d'une mesure d'écartement (E, A) entre le point médian axial des disques d'épandage et le point d'intersection d'une ligne parallèle au couloir passant par le milieu de l'épandeur à deux disques avec la bordure de champ (8).

16. Procédé selon l'une quelconque des revendications 1 à 15, **caractérisé en ce qu'**en cas de tournière et/ou de couloir de bordure (9) s'étendant selon un angle de moins 85 degrés à > 0 degré par rapport au couloir (2) en intérieur de champ (1), les points de transition sont calculés séparément pour l'organe de dosage respectif à droite/à gauche.

17. Procédé selon l'une quelconque des revendications 1 à 16, **caractérisé en ce qu'**en cas de tournière et/ou de couloir de bordure (9) s'étendant selon un angle de moins 85 degrés à > 0 degré par rapport au couloir (2) en intérieur de champ (1), les réglages standard sont modifiés les uns par rapport aux autres à l'intérieur des points de transition ou d'un tronçon partiel à droite/à gauche.

18. Procédé selon l'une quelconque des revendications 1 à 17, **caractérisé en ce que** l'angle (a) entre le couloir (2) en intérieur de champ (1) et la tournière (6) et/ou le couloir de bordure (9) est pris en compte dans le calcul des points de transition pour les organes de dosage respectifs.

19. Procédé selon l'une quelconque des revendications 1 à 18, **caractérisé en ce que** le point cible est déplacé pendant la fermeture des organes de dosage.

20. Procédé selon l'une quelconque des revendications 1 à 19, **caractérisé en ce que** la position actuelle de l'épandeur par rapport à la forme de champ et aux couloirs (2, 9) est prise en compte dans le calcul des points de transition et lors du réglage de l'épandeur.
